# EUROPEAN PATENT APPLICATION

(11) **EP 3 113 539 A1**
(43) Date of publication of application: **04.01.2017**
(21) Application number: 15174618.7
(22) Date of filing: 30.06.2015
(51) Int. Cl.: H04W 28/08

(54) **LOAD BALANCING USER PLANE TRAFFIC IN A TELECOMMUNICATION NETWORK**

(71) Applicant: Vodafone IP Licensing Limited, The Connection Newbury Berkshire RG14 2FN (GB)
(72) Inventor: DEL BO, Marco Angelo Pietro, London, W2 6BY (GB); CECI, Valerio, London, W2 6BY (GB)
(74) Representative: Boult Wade Tennant

(57) **Abstract**

A load balancing entity for load balancing user plane traffic in a telecommunication network comprises a first interface configured to receive control plane traffic from a node requesting to establish a session, a second interface configured to communicate with one or more user plane entities, each user plane entity being identified by a respective IP address and being configured to receive and manage user plane traffic, a processing unit configured to select one user plane entity and communicate the IP address of the selected user plane entity to the node to enable the node to exchange user plane traffic directly with the selected user plane entity.

## Description

### Field of the invention

The present invention relates to the field of mobile telecommunication networks. In particular, the present invention relates to a load balancing entity, a gateway and system for load balancing user plane traffic in a telecommunication network.

### Background of the invention

Nowadays various telecommunication network infrastructure suppliers provide telecommunication network service providers with monolithic or closed resource systems consisting of network nodes with proprietary management systems. This means that several proprietary systems are existing within the telecommunication provider's network and providing capacity to the network.

Whenever a service provider has to implement or allocate services into his network a long process of checking available resources within the monolithic structure will take place.

In case the available resources do not meet the requirements to allocate the required services, the service provider has to ask the network infrastructure provider to provide for new resources.

If the required services are temporary - such as in case of peak services - the new resources will become useless when the services are no more required. Moreover, if the service provider wishes to reduce certain services, the allocated resources cannot be reduced correspondingly.

Cloud computing has emerged recently as optimization of the closed resource systems. A cloud, for example in the case of "infrastructure as a services, is defined as a set of resources (e.g., processing, storage, or other resources) available through a network that can serve at least some traditional electronic data processing and information systems functions for an enterprise.

Telecommunication networks have been proposed where network services are hosted in cloud resources, i.e. virtualized resources.

With respect to gateway network services, such as GGSN, S-GW and P-GW network services, the state of the art discloses telecommunication network where implementation of the above gateway services is still achieved with physical dedicated hardware.

Typically the gateway comprises two different types of service that are implemented on physical boards and connected by an internal high speed bus: load balancing line cards and service processing units.

The load balancing line cards expose the external IP interface of the node, known by the other Network Elements (e.g. IP routers, SGSNs, PCRF, Charging System etc.) and receive/transmit the IP packets carrying the control plane messages (e.g. GTP-C, Gx, Gy) and the user plane (e.g. GTP-U) traffic. These units, at the setup of a new data bearer session (for 3G a PDP context setup), assign the session to a service processing unit and then forward all the user plane and control plans messages of that session to the specific Service Processing Unit.

The service processing units implement most of the features required by a GGSN (e.g. Packet Inspection of user plane, byte counting etc.).

The scalability in hardware solutions is achieved by dedicated chipset on the load balancing line cards, ensuring high throughput of IP packets, and by the possibility to introduce as many service processing units as necessary.

US 2005/122942 discloses a method of balancing a load in a General Packet Radio Service (GPRS) network which prevents a load from concentrating on a specific Gateway GPRS Supporting Node (GGSN). The method provides that, when a Service GPRS Supporting Node (SGSN) connected to a mobile node establishes a session, a GGSN is selected having a smallest number of established sessions among a number of GGSNs corresponding to an Access Point Name (APN).

US 2005/120350 discloses load balancing for control plane traffic of a network element comprising multiple CPU nodes assigned to a common external IP address in a packet data enabled telecommunication network. IP messages addressed to the network element are received, and received IP messages comprising GTP-C messages are identified.

### Summary of the invention

Against this background, a load balancing entity for load balancing user plane traffic in a telecommunication network is provided herewith.

It has been found that it is convenient to have a first interface configured to receive a control plane message from a node, a second interface configured to communicate with user plane entities, each user plane entity being identified by a respective IP address and being configured to directly receive and manage user plane traffic, and a processing unit configured to select one user plane entity and communicate the IP address of the selected user plane entity to the node to enable the node to send user plane traffic directly to the selected user plane entity.

An advantage of the invention is that user plane traffic is routed and managed directly by a user plane entity without involving the load balancing entity. Any increase of user plane traffic can be easily handled by scaling out, i.e. by deploying and selecting an additional user plane entity when needed.

A further advantage of the invention is that addition of a new user plane entity may be managed automatically without requiring a re-configuration of the other elements of the telecommunication network. This allows to overcome the bottleneck of state of art solutions where all user plane traffic related to one gateway is managed by one single load balancer of that gateway.

The present invention also allows the IP packets of the user plane traffic of a certain session to be managed by one single user plane entity, thereby improving the latency of the gateway and the overall performances of the network.

Therefore, in a first aspect it is provided a load balancing entity for load balancing user plane traffic in a telecommunication network, said load balancing entity comprising a first interface configured to receive control plane traffic from a node requesting to establish a session, a second interface configured to communicate with one or more user plane entities, each user plane entity being identified by a respective IP address and being configured to receive and manage user plane traffic, a processing unit configured to select one of said one or more user plane entities and communicate the IP address of the selected user plane entity to said node to enable said node to exchange user plane traffic directly with the selected user plane entity.

Preferably, the selection of one user plane entity is based on a set of rules stored in said load balancing entity.

Preferably, said set of rules are communicated to the load balancing entity by a network managing entity.

According to one embodiment, said processing unit is configured to process the control plane traffic received at said first interface from said node and select said one user plane based on the processed control plane traffic.

Preferably, the load balancing unit is configured to send a request message to the selected user plane entity and receive a response message from the selected user plane entity, said response message comprising the IP address of the selected user plane entity.

Preferably, the IP address of the selected user plane entity is propagated to any network element of the telecommunication network.

In a second aspect, it is provided a user plane entity for managing user plane traffic in a mobile telecommunication network, said user plane entity being associated with one load balancing entity, said user plane entity being identified by an IP address and comprising a first interface configured to communicate with said associated load balancing to send said IP address to said associated load balancing entity upon receiving a request message from said associated load balancing entity, a second interface configured to receive and manage user plane traffic from said node through said IP address.

In a third aspect, it is provided a gateway for managing user plane traffic in a telecommunication network, said gateway comprising a load balancing entity, and one or more user plane entities, each user plane entity being identified by a respective IP address and being configured to receive and manage user plane traffic, wherein said load balancing entity comprises a first interface configured to receive control plane traffic from a node requesting to establish a session, a second interface configured to communicate with said one or more user plane entities, a processing unit configured to select one of said one or more user plane entities and communicate the IP address of the selected user plane entity to said node to enable said node to exchange user plane traffic directly with the selected user plane entity, each user plane entity comprises a first interface configured to communicate with said load balancing to send its IP address to said load balancing entity upon receiving a request message from said load balancing entity, a second interface configured to receive and manage user plane traffic from said node through said IP address.

In a fourth aspect, it is provided a system for load balancing user plane traffic in a mobile telecommunication network, said system comprising a node configured to receive a control plane request from a user entity and send control plane traffic based on said control plane request, a load balancing entity configured to communicate with the node and receive the control plane traffic sent by the node, one or more user plane entities, each user plane entity being identified by a respective IP address and being configured to manage user plane traffic, said load balancing entity comprises a first interface configured to receive control plane traffic from a node requesting to establish a session, a second interface configured to communicate with said one or more user plane entities, a processing unit configured to select one of said one or more user plane entities and communicate the IP address of the selected user plane entity to said node to enable said node to exchange user plane traffic directly with the selected user plane entity, each user plane entity comprises a first interface configured to communicate with said load balancing to send its IP address to said load balancing entity upon receiving a request message from said load balancing entity, a second interface configured to receive and manage user plane traffic from said node through said IP address.

In a fifth aspect, it is provided a method of operating a load balancing entity, wherein said load balancing entity comprises a first interface configured to receive control plane traffic from a node requesting to establish a session, a second interface configured to communicate with one or more user plane entities, each user plane entity being identified by a respective IP address and being configured to receive and manage user plane traffic, a processing unit configured to select one of said one or more user plane entities and communicate the IP address of the selected user plane entity to said node to enable said node to exchange user plane traffic directly with the selected user plane entity, said method comprising the steps of receiving control plane traffic from a node, selecting one of said one or more user plane entities and sending a request message to the selected user plane entity to obtain the IP address of the selected user plane entity, receiving the IP address of the selected user plane entity, communicating the IP address of the selected user plane entity to the node to enable the node to exchange user plane traffic directly with the selected user plane entity.

In a sixth aspect, it is provided a method of operating a user plane entity, said user plane entity being associated with one load balancing entity and being identified by an IP address, said load balancing entity comprising a first interface configured to receive control plane traffic from a node requesting to establish a session, a second interface configured to communicate with one or more user plane entities, each user plane entity being identified by a respective IP address and being configured to receive and manage user plane traffic, a processing unit configured to select one of said one or more user plane entities and communicate the IP address of the selected user plane entity to said node to enable said node to exchange user plane traffic directly with the selected user plane entity, said user plane entity comprising a first interface configured to communicate with said associated load balancing to send said IP address to said associated load balancing entity upon receiving a request message from said associated load balancing entity, a second interface configured to receive and manage user plane traffic from said node through said IP address, said method comprising the steps of receiving a request message from said associated load balancing entity, sending said IP address to said associated load balancing entity in response to said request message.

In a seventh aspect, it is provided a method of operating a gateway, said gateway comprising a load balancing entity, and one or more user plane entities, each user plane entity being identified by a respective IP address and being configured to receive and manage user plane traffic, wherein said load balancing entity comprises a first interface configured to receive control plane traffic from a node requesting to establish a session, a second interface configured to communicate with said one or more user plane entities, a processing unit configured to select one of said one or more user plane entities and communicate the IP address of the selected user plane entity to said node to enable said node to exchange user plane traffic directly with the selected user plane entity, each user plane entity comprises a first interface configured to communicate with said load balancing to send its IP address to said load balancing entity upon receiving a request message from said load balancing entity, a second interface configured to receive and manage user plane traffic from said node through said IP address, said method comprising the steps of at the load balancing entity, receiving control plane traffic from a node, selecting one of said one or more user plane entities and sending a request message to the selected user plane entity, at the user plane entity, receiving the request message from the load balancing entity and sending said IP address to the load balancing entity in response to said request message, at the load balancing entity, receiving the IP address of the selected user plane entity and communicating the IP address of the selected user plane entity to the node to enable the node to exchange user plane traffic directly with the selected user plane entity.

In an eight aspect, it is provided a method of operating a system, said system comprising a node configured to receive a control plane request from a user entity and send control plane traffic based on said control plane request, a load balancing entity configured to communicate with the node and receive the control plane traffic sent by the node, one or more user plane entities, each user plane entity being identified by a respective IP address and being configured to manage user plane traffic, said load balancing entity comprises a first interface configured to receive control plane traffic from a node requesting to establish a session, a second interface configured to communicate with said one or more user plane entities, a processing unit configured to select one of said one or more user plane entities and communicate the IP address of the selected user plane entity to said node to enable said node to exchange user plane traffic directly with the selected user plane entity, each user plane entity comprises a first interface configured to communicate with said load balancing to send its IP address to said load balancing entity upon receiving a request message from said load balancing entity, a second interface configured to receive and manage user plane traffic from said node through said IP address, said method comprising the steps of at the node, receiving a control plane request from a user entity and sending control plane traffic based on said control plane request to said load balancing entity, at the load balancing entity, receiving control plane traffic from the node, selecting one of said one or more user plane entities and sending a request message to the selected user plane entity, at the user plane entity, receiving the request message from the load balancing entity and sending said IP address to the load balancing entity in response to said request message, at the load balancing entity, receiving the IP address of the selected user plane entity and communicating the IP address of the selected user plane entity to the node to enable the node to exchange user plane traffic directly with the selected user plane entity.

### Brief description of the drawings

The present invention will now be described in more detail hereinafter with reference to the accompanying drawings, in which some embodiments of the invention are shown. Drawings illustrating the embodiments are schematic representations.
FIG. 1 is a schematic view of a system for load balancing user plane traffic in a telecommunication network according to one embodiment of the present invention,
FIG. 2 shows the messages exchanged between the entities of the system of FIG. 1.

### Detailed description

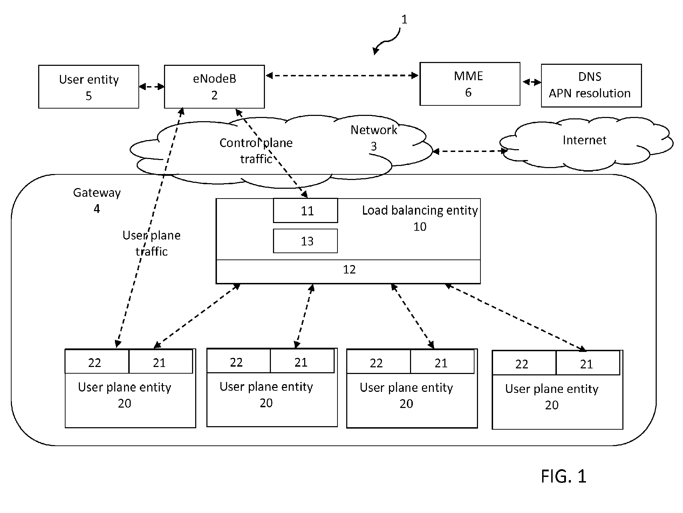

Figure 1 shows a system 1 for load balancing user plane traffic in a telecommunication network.

The system 1 comprises a node 2, a telecommunication network 3 and a gateway 4.

The gateway 4 comprises a load balancing entity 10 and one or more user plane entities 20.

The load balancing entity 10 and the user plane entities 20 are hosted in one or more resources. Preferably, the resources comprise cloud resources.

One or more telecommunication network applications are loaded and run respectively on the load balancing entity 10 and the user plane entities 20 to perform a network service associated with the respective entity.

Hereinafter the telecommunication network application will be referred to as application and the network service as service.

A service is instantiated by one or more application instances loaded and running on the load balancing entity 10 and each user plane entity 20.

Preferably, the system 1 comprises a network entity for managing resource allocation in the mobile telecommunication network, one or more cloud managing entities and one or more network managing entities.

Each cloud managing entity is configured to manage respective cloud resources. Each network managing entity is configured to manage respective network elements hosted in the cloud resources, in the example the load balancing entity 10 and the user plane entities 20.

The node 2 is configured to receive a control plane request from a user entity 5 and send a control plane message based on this control plane request. The node 2 is also configured to manage user plane traffic.

Hereinafter, the set of control plane messages sent by the node 2 will be referred to as control plane traffic.

In a 3G network, the node 2 is a serving GPRS support node (SGSN) while in an LTE network the node 2 is an evolved Node B (eNB).

The user entity 5 comprises a device operable to communicate with the node 2, for example a Personal Computer, a laptop, a mobile station and the like.

The load balancing entity 10 is configured to communicate with the node 2 and receive the control plane traffic sent by the node 2. To this purpose, the load balancing entity 10 comprises a first interface 11 configured to receive control plane traffic from the node 2.

Preferably, the control plane traffic includes control plane interfaces to perform the following functions:
- bearer/PdP context management (GTP-C signalling),
- policy and control management toward a user policy entity, such as PCRF (Gx signalling),
- charging traffic management (Gy and Gz signalling).

The load balancing entity 10, preferably the first interface 11, is identified by one respective IP address for each of the above control plane interfaces.

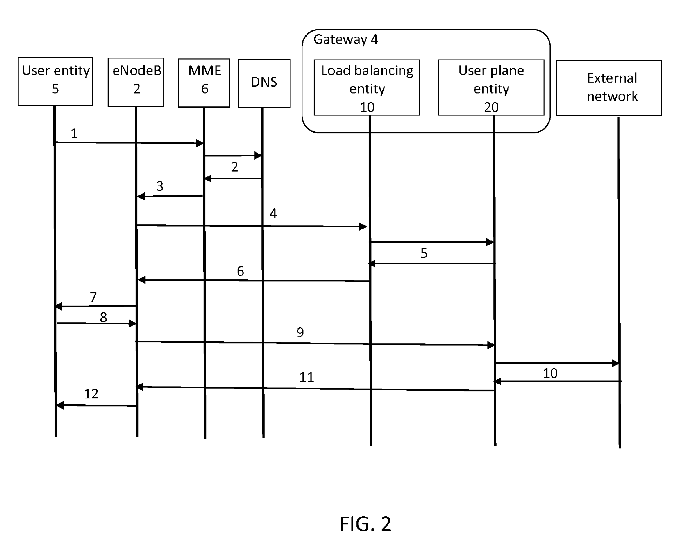

In the example of GTP-C signalling shown in figure 2, the user entity 5 sends a request message comprising a Create Packet Data Protocol (PDP) Context Request message to a Mobility Management Entity (MME) 6 (step 1). This request message comprises the Access Point Name to which the user entity 5 is attempting to connect. The MME 6 resolves the APN via a DNS query (step 2). The node 2 receives from the MME 6 a Create PDP Context Response message comprising the GTP tunnel end point (step 3), i.e. the IP address of the load balancing entity 10. The nodes 2 then sends a request message comprising a GTP Tunnel Creation Request message to the load balancing entity 10 (step 4). This request message is received by the first interface 11.

The load balancing entity 10 comprises a second interface 12 configured to communicate with one or more user plane entities 20.

Each user plane entity 20 is identified by a respective IP address and is configured to manage user plane traffic. To this purpose, each user plane entity 20 performs a number of user plane services. For example, in case of bearer sessions and PDP contexts management, the user plane entity 20 is configured to perform packet forwarding, packet inspection, packet handling, etc.

The user plane entity 20 comprises a first interface 21 configured to communicate with the load balancing entity 10 to send its IP address to this load balancing entity 10 upon receiving a request message from this load balancing entity 10 and a second interface 22 configured to receive and manage user plane traffic received through its IP address.

The load balancing entity 10 comprises also a processing unit 13 configured to select one of the user plane entities 20 and communicate the IP address of the selected user plane entity 20 to the node 2 to enable the node 2 to exchange user plane traffic directly with the selected user plane entity 2.

By this way, the gateway 4 comprises one load balancing entity 10 and one or more user plane entities 20, each user plane entity with a respective IP address to which the user plane traffic generated by the node 2 is sent. The IP address of each selected user plane entity 20 is known by the load balancing entity 10, which communicates this IP address to the node 2, and by any other network entity of the telecommunication network 3.

Preferably, this IP address of the selected user plane entity 20 is identified as GTP-U address in GTP protocol, for example in a session set up phase, and therefore it is know by any network entity of the telecommunication network 3.

Therefore, the gateway 4 is identified by a number of GTP-U addresses equal to the number of the user plane entities 20 it comprises. With this arrangement, the gateway 4 can be reached by user plane traffic on any of the GTP-U addresses of the user plane entities 20 associated to the load balancing entity 10 of said gateway 4. When needed, an additional user plane entity 20 may be instantiated, for example to increase the capacity of the gateway 4.

This instantiation of an additional user plane entity 20 may be performed manually by an operator of the overall telecommunication network, for example through a network management entity, or automatically based on certain operating conditions, such as the number of bearer sessions associated to a user plane entity 20. The presence of a number of GTP-U addresses of the existing user plane entities 20 and any additional GTP-U address added following an automatically or manually instantiation of an additional user plane entity 20 do not require a modification or re-configuration of the network entities of the overall telecommunication network, such as DNS, MME, PCRF, on line charging, etc., since the GTP-U address associated to each new bearer session is automatically defined by the GTP-C protocol negotiation during the bearer setup phase.

Preferably, the processing unit 13 of the load balancing entity 10 verifies the available user plane entities 20 and select one user plane entity 20 based on a set of rules.

The rules may be stored in the load balancing entity 10 or may be provided by a network managing entity, such as the network managing entity.

Preferably, the processing unit 13 is configured to selected one user plane entity 20 based on the control plane traffic received at the first interface 11.

In the example of figure 2, the load balancing entity 10 communicates with the available user plane entities 20 to verify which user plane entity 20 can be selected. Once one user plane entity 20 is selected the load balancing entity 10 sends a request message to this selected user plane entity 20 to receive its IP address. The selected user plane entity 20 sends to the load balancing entity 10 a response message comprising its IP address to be used by the node 2 for exchanging user plane traffic with the gateway 4, particularly with the selected user plane entity 20, and, preferably, the user plane end point for RTP/UDP traffic (step 5).

After one user plane entity 20 has been selected and its IP address has been received, the load balancing entity 10 sends a GTP creation response to the node 2 (step 6).

The node 2 communicates with the user entity 5 (step 7) to provide the messages to allow the user entity 5 to send user plane traffic through the node 2 itself (step 8) and the selected user plane entity 20 (steps 9) at its IP address towards internet servers or other application server.

The user plane entity 20 receives and manages the user plane traffic sent by the user entity 5 through the node 2 and route this user plane traffic towards the internet network (step 10). In response the user plane entity 20 receives from the internet network the user plane traffic for the user entity 5 and routes this user plane traffic towards the user entity 5 through the node 2 (steps 11, 12).

Preferably, the load balancing entity 10 is configured to route policing and charging messages carried by Gx and Gy interfaces to and from external nodes, i.e. PCRF and real time charging system, the user plane entities 20 to manage the related bearer session.

With this invention, IP packets of user plane traffic (GTP-U) belonging to a customer session are managed and forwarded by one user plane entity 20. A possible increase of user plane traffic can be handled by scaling out i.e. by deploying new instances of user plane entities 20 when this is needed.

While the invention has been described with reference to preferred embodiments, the description is illustrative of the invention and is not to be construed as limiting the invention.

Various modifications and applications may occur to those skilled in the art without departing from the scope of the invention as defined by the appended claims.

It is to be understood that the above description is given by way of example and only for the benefit of understanding the solution, and it must include also any combination of the above features, as well as any alterations, modifications or otherwise addition which could be done by a skilled person by use of his/her skills and/or general knowledge in the relevant and/or neighbouring art.

## Claims

1. A load balancing entity for load balancing user plane traffic in a telecommunication network, said load balancing entity comprising:
- a first interface configured to receive control plane traffic from a node requesting to establish a session,
- a second interface configured to communicate with one or more user plane entities, each user plane entity being identified by a respective IP address and being configured to receive and manage user plane traffic,
- a processing unit configured to select one of said one or more user plane entities and communicate the IP address of the selected user plane entity to said node to enable said node to exchange user plane traffic directly with the selected user plane entity.

2. The load balancing entity according to claim 1, wherein the selection of one user plane entity is based on a set of rules stored in said load balancing entity.

3. The load balancing entity according to claim 2, wherein said set of rules are communicated to the load balancing entity by a network managing entity.

4. The load balancing entity according to any of claims 1 to 3, wherein said processing unit is configured to process the control plane traffic received at said first interface from said node and select said one user plane entity based on the processed control plane traffic.

5. The load balancing entity according to any of claims 1 to 4, wherein said load balancing unit is configured to send a request message to the selected user plane entity and receive a response message from the selected user plane entity, said response message comprising the IP address of the selected user plane entity.

6. The load balancing entity according to any of claims 1 to 5, wherein the IP address of the selected user plane entity is propagated to any network element of the telecommunication network comprising said node.

7. A user plane entity for managing user plane traffic in a mobile telecommunication network, said user plane entity being associated with one load balancing entity according to any of claims 1 to 6, said user plane entity being identified by an IP address and comprising:
- a first interface configured to communicate with said associated load balancing to send said IP address to said associated load balancing entity upon receiving a request message from said associated load balancing entity,
- a second interface configured to receive and manage user plane traffic from said node through said IP address.

8. A gateway for managing user plane traffic in a telecommunication network, said gateway comprising:
- a load balancing entity, and
- one or more user plane entities, each user plane entity being identified by a respective IP address and being configured to receive and manage user plane traffic,
wherein
- said load balancing entity comprises:
- a first interface configured to receive control plane traffic from a node requesting to establish a session,
- a second interface configured to communicate with said one or more user plane entities,
- a processing unit configured to select one of said one or more user plane entities and communicate the IP address of the selected user plane entity to said node to enable said node to exchange user plane traffic directly with the selected user plane entity,
- each user plane entity comprises:
- a first interface configured to communicate with said load balancing to send its IP address to said load balancing entity upon receiving a request message from said load balancing entity,
- a second interface configured to receive and manage user plane traffic from said node through said IP address.

9. A system for load balancing user plane traffic in a mobile telecommunication network, said system comprising:
- a node configured to receive a control plane request from a user entity and send control plane traffic based on said control plane request to establish a session,
- a gateway according to claim 8.

10. A method of operating a load balancing entity, wherein said load balancing entity comprises:
- a first interface configured to receive control plane traffic from a node requesting to establish a session,
- a second interface configured to communicate with one or more user plane entities, each user plane entity being identified by a respective IP address and being configured to receive and manage user plane traffic,
- a processing unit configured to select one of said one or more user plane entities and communicate the IP address of the selected user plane entity to said node to enable said node to exchange user plane traffic directly with the selected user plane entity,
said method comprising the steps of:
- receiving control plane traffic from a node,
- selecting one of said one or more user plane entities and sending a request message to the selected user plane entity to obtain the IP address of the selected user plane entity,
- receiving the IP address of the selected user plane entity,
- communicating the IP address of the selected user plane entity to the node to enable the node to exchange user plane traffic directly with the selected user plane entity.

11. A method of operating a user plane entity, said user plane entity being associated with one load balancing entity and being identified by an IP address,
said load balancing entity comprising:
- a first interface configured to receive control plane traffic from a node requesting to establish a session,
- a second interface configured to communicate with one or more user plane entities, each user plane entity being identified by a respective IP address and being configured to receive and manage user plane traffic,
- a processing unit configured to select one of said one or more user plane entities and communicate the IP address of the selected user plane entity to said node to enable said node to exchange user plane traffic directly with the selected user plane entity,
said user plane entity comprising:
- a first interface configured to communicate with said associated load balancing to send said IP address to said associated load balancing entity upon receiving a request message from said associated load balancing entity,
- a second interface configured to receive and manage user plane traffic from said node through said IP address,
said method comprising the steps of:
- receiving a request message from said associated load balancing entity,
- sending said IP address to said associated load balancing entity in response to said request message.

12. A method of operating a gateway, said gateway comprising:
- a load balancing entity, and
- one or more user plane entities, each user plane entity being identified by a respective IP address and being configured to receive and manage user plane traffic,
wherein
- said load balancing entity comprises:
- a first interface configured to receive control plane traffic from a node requesting to establish a session,
- a second interface configured to communicate with said one or more user plane entities,
- a processing unit configured to select one of said one or more user plane entities and communicate the IP address of the selected user plane entity to said node to enable said node to exchange user plane traffic directly with the selected user plane entity,
- each user plane entity comprises:
- a first interface configured to communicate with said load balancing to send its IP address to said load balancing entity upon receiving a request message from said load balancing entity,
- a second interface configured to receive and manage user plane traffic from said node through said IP address,
said method comprising the steps of:
- at the load balancing entity, receiving control plane traffic from a node, selecting one of said one or more user plane entities and sending a request message to the selected user plane entity,
- at the user plane entity, receiving the request message from the load balancing entity and sending said IP address to the load balancing entity in response to said request message,
- at the load balancing entity, receiving the IP address of the selected user plane entity and communicating the IP address of the selected user plane entity to the node to enable the node to exchange user plane traffic directly with the selected user plane entity.

13. A method of operating a system, said system comprising:
- a node configured to receive a control plane request from a user entity and send control plane traffic based on said control plane request,
- a load balancing entity configured to communicate with the node and receive the control plane traffic sent by the node,
- one or more user plane entities, each user plane entity being identified by a respective IP address and being configured to manage user plane traffic,
- said load balancing entity comprises:
- a first interface configured to receive control plane traffic from a node requesting to establish a session,
- a second interface configured to communicate with said one or more user plane entities,
- a processing unit configured to select one of said one or more user plane entities and communicate the IP address of the selected user plane entity to said node to enable said node to exchange user plane traffic directly with the selected user plane entity,
- each user plane entity comprises:
- a first interface configured to communicate with said load balancing to send its IP address to said load balancing entity upon receiving a request message from said load balancing entity,
- a second interface configured to receive and manage user plane traffic from said node through said IP address,
said method comprising the steps of:
- at the node, receiving a control plane request from a user entity and sending control plane traffic based on said control plane request to said load balancing entity,
- at the load balancing entity, receiving control plane traffic from the node, selecting one of said one or more user plane entities and sending a request message to the selected user plane entity,
- at the user plane entity, receiving the request message from the load balancing entity and sending said IP address to the load balancing entity in response to said request message,
- at the load balancing entity, receiving the IP address of the selected user plane entity and communicating the IP address of the selected user plane entity to the node to enable the node to exchange user plane traffic directly with the selected user plane entity.
